# EUROPEAN PATENT SPECIFICATION

(11) **EP 0 521 185 B1**
(45) Date of publication and mention of the grant of the patent: **10.01.1996**
(21) Application number: 91111191.2
(22) Date of filing: 05.07.1991
(51) Int. Cl.: H01M 8/06

(54) **Power generation method using molten carbonate fuel cells**
Energiegewinnungsverfahren mit Anwendung von Karbonatschmelzbrennstoffzellen
Méthode de production d'energie utilisant des piles à combustible à carbonates fondus

(43) Date of publication of application: 07.01.1993
(73) Proprietor: Ishikawajima-Harima Heavy Industries Co., Ltd., Chiyoda-ku, Tokyo 100 (JP)
(72) Inventor: Kinoshita, Noboru, Chiba-shi, Chiba (JP)
(74) Representative: Schaumburg, Thoenes & Thurn

(56) References cited:
- EP-A- 0 376 219
- FR-A- 2 012 819
- US-A- 3 527 618
- US-A- 4 751 151
- US-A- 4 791 033
- CHEMICAL ABSTRACTS, vol. 110, no. 12, 20 March 1989, Columbus, OH (US); M. SUSUMU et al., p. 216, no. 98842p
- PATENT ABSTRACTS OF JAPAN vol. 15, no. 498 (E-1146)(5026) 17 December 1991

## Description

The present invention relates to a power generation method using molten carbonate fuel cells which directly convert chemical energy of fuel into electric energy in accordance with the precharacterizing portion of claim 1.

A conventional fuel cell system is generally comprised of a stack of fuel cell elements and separators interposed between each two adjacent fuel cell elements. Each fuel cell generally includes an electrolyte plate (tile), a cathode (oxygen electrode) and an anode (fuel electrode). In case of molten carbonate fuel cell, the electrolyte plate includes a porous substance soaked with molten carbonate, and the cathode and the anode sandwich the electrolyte plate. Oxidizing gas is fed to the cathode and fuel gas is fed to the anode to cause power generation.

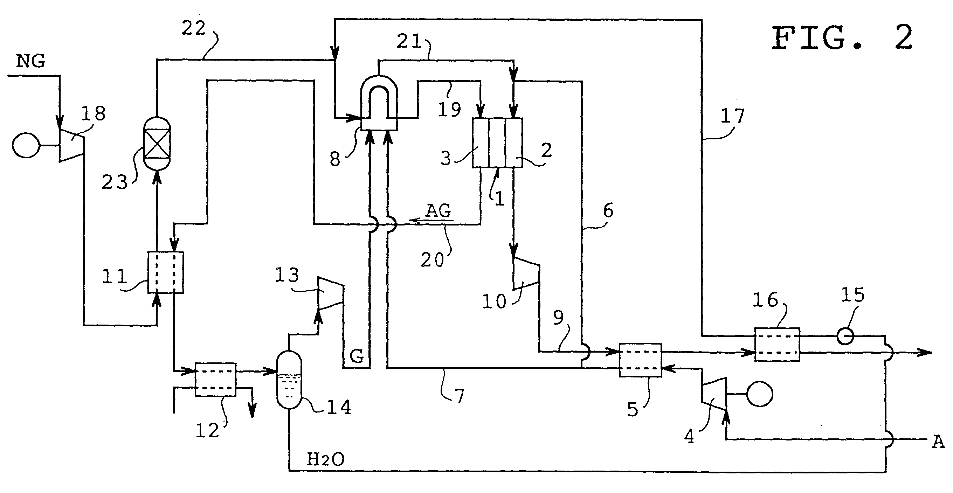

The fuel gas used for the fuel cell is generally reformed by a reformer. Figure 2 of the accompanying drawings shows a power generation system using a molten carbonate fuel cell in which natural gas is used as the fuel to be reformed (referred to as "raw material gas"). Before feeding oxidizing gas to a cathode 2 of a fuel cell 1, air A is preheated by an air preheater 5 in an air feed line 6. Part of the air A is introduced to a reformer 8 by a branch line 7. Gases discharged from the cathode 2 are introduced to a turbine 10 by a line 9 and then expelled via the air preheater 5. On the other hand, natural gas NG (for example, methane) which is fed to the anode 3 and reformed therein is pressurized by a blower 18 and forced to flow through a natural gas preheater 11 and a desulfurizer 23 before reaching the reformer 8. The natural gas NG (raw material gas) is reformed in the reformer 8 and fed to the anode 3 from a fuel gas line 19. Gases AG discharged from the anode 3 (called "anode exhaust gas") contain moisture so that the moisture of the anode exhaust gas AG has to be removed. The moisture (steam) separated from the anode exhaust gas is mixed with the natural gas NG before an entrance of the reformer 8. To this end, the anode exhaust gas AG is led to the natural gas preheater 11 from an anode exit gas line 20, and cooled and condensed by a condenser 12 so as to separate it into gas G and water. The gas G is introduced to the reformer 8 by a blower 13 and used for combustion. The water (H₂O) is pressurized by a pump 15 and transferred to a vaporizer 16. The water becomes steam in the vaporizer 16 and flows in a steam line 17 to merge with the natural gas NG of the natural gas introduction line 22 on the reformer entrance side. Gases discharged from the reformer 8 which contain CO₂ flow through an exhaust gas line 21 and enter the cathode 2 with the air of the air feed line 6.

However, this type of power generation system has drawbacks: The steam required for reforming reaction are made from water. Thus, the vaporizer 16 is a requisite. Further, the water to be introduced to the vaporizer 16 should be high-purity water so that a water treatment equipment (generally a water treatment equipment adapted to prepare boiler-water, i.e., a gas-liquid separator) is necessary.

EP-A-0376219 describes a conventional method of using a MCFC with a carbon dioxide separator comprising an absorption column and aqueous potassium carbonate or diethanolamine solution through which anode exhaust gas ascends before it is recirculated to the reformer. In accordance with this known method at first gases discharged from the anode are introduced to the CO₂ separator. Next the anode exhaust gas is allowed to contact a liquid absorbent inside the CO₂ separator such that CO₂ of the anode exhaust gas is absorbed and separated by the absorbent and such that the CO₂-removed anode exhaust gas contains in the form of steam moisture which corresponds to vapour pressure of the absorbent. At least the CO₂-removed anode exhaust gas is introduced to the reformer from the CO₂ separator together with the raw material gas such that reformation of the raw material gas occurs and the raw material gas is converted into the fuel gas.

In EP-A-0376219, a condenser cools the anode exhaust gas to separate the moisture. This moisture is fed to a boiler to produce steam and the steam is introduced to the reformer via a heater. The anode exhaust gas is cooled by the condenser before entering the CO₂ separator.

Further, FR-A-2012819 discloses a method of operating a MCFC, whereby the anode exhaust gas is recirculated via a carbon dioxide separator to the reformer. Thereby part of the water present in the anode exhaust gas is recycled to the reformer as steam. For the type of carbon dioxide separator to be used FR-A-2012819 refers to US-A-3527618, which teaches a separator wherein the gas ascends and the aqueous potassium carbonate absorbent descends, and which is an asbestos, porous nickel or porous plastics.

The object of the present invention is to provide a method of producing electric power using molten carbonate fuel cells without the need of a steam-producing device, heat for vaporizing water and a water treatment equipment in obtaining steam necessary for reformation of fuel gas.

This object is achieved by a method stated in claim 1. Other preferred features are given in dependent claims 2 to 6.
- Figure 1: shows a schematic block diagram of a power generation system using fuel cells used to carry out a power generation method according to the present invention; and
- Figure 2: is a schematic block diagram of a conventional power generation system.

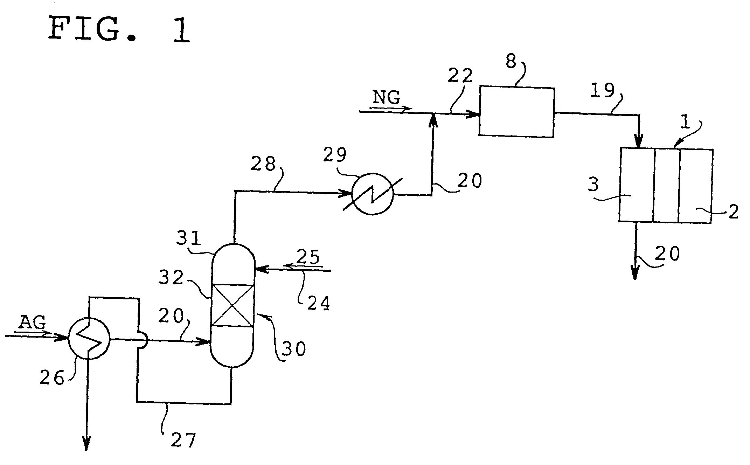

Now, a preferred embodiment will be described with reference to Figures 1 and 2 of the accompanying drawings.

Figure 1 illustrates a major part of a power generation system adapted to carry out a power generation method of the present invention. Other part of the power generation system is basically identical to corresponding part of the system illustrated in Figure 2, and same numerals are assigned to the same elements in Figures 1 and 2.

First, part of the system of Figure 2 which is replaced by the system of Figure 1 is reviewed. In the system of Figure 2, gases discharged from the anode 3 of the fuel cell 1 (called "anode exhaust gas") AG are condensed by the condenser 12 and gas component of the anode exhaust gas is separated from moisture component by a gas-liquid separator 14. The gas component G is introduced to the reformer 8 whereas the moisture component is sent to the vapor producing device 16 by the pump 15 and transformed to steam therein. Then, the steam is introduced to the natural gas line 22 and merges with natural gas NG before entering the reformer 8. The just-described structure is changed by the teaching of the present invention as shown in Figure 1, and other part of the system is similar to Figure 2.

Referring to Figure 1, an anode exit gas line 20 of the fuel cell 1 is connected to the carbon dioxide gas separator 30 via a heat exchanger 26. The liquid absorbent 25 whose temperature is set to a predetermined value is introduced to the carbon dioxide gas separator 30 by an absorbent feed line 24.

The carbon dioxide gas separator 30 includes a vertical body 31 and a for-the-contact packed bed 32 placed in the vertical body 31. The anode exhaust gas AG is introduced to the CO₂ separator 30 from the bottom of the separator body 31 and goes up through the packed bed 32. The absorbent 25 is introduced to the CO₂ separator 30 from the top of the separator body 31 and goes down through the packed bed 32. Thus, the anode exhaust gas AG and the absorbent 25 contact each other in the bed 32.

The absorbent 25 may be aqueous alkali salt solutions such as potassium carbonate, aqueous amine solutions such as diethanolamine or mixture of alkali salt and aqueous amine solutions.

The absorbent 25 fed to the carbon dioxide separator 30 from the absorbent feed line 24 contacts the anode exhaust gas AG flowing upward in the carbon dioxide separator 30 and then flows into the heat exchanger 26 through an absorbent discharge line 27. The absorbent 25 is heat-exchanged with the anode exhaust gas AG in the heat exchanger 26 and regenerated by a regenerator (not shown) before introduced into the absorbent feed line 24 again.

Inside the CO₂ separator 30, the liquid absorbent 25 and the anode exhaust gas AG undergo gas-liquid contact so that CO₂ of the anode exhaust gas is absorbed and removed by the absorbent 25. In this case, if a temperature of the absorbent 25 is maintained to a predetermined value, the anode exhaust gas AG from which CO₂ has been removed can contain and hold steam enough for the reformation. In other words, when the absorbent 25 enters the CO₂ separator 30, the water component of the absorbent 25 is separated from the gas component of the absorbent 25, and the gas component (steam) is discharged from the CO₂ separator 30 with the anode exhaust gas AG. Therefore, an amount of steam to be formed in the CO₂ separator 30 can be adjusted by controlling the temperature of the absorbent 25 entering the CO₂ separator 30 from the line 24. The anode exhaust gas AG which contains such steam is introduced to the reformer 8 through the anode gas line 28 and the heat exchanger 29. The raw material gas NG is also introduced to the reformer 8 from the raw material gas line 22. Consequently, the anode exhaust gas AG and the raw material gas NG undergo the reforming reaction in the reformer 8. At this situation, the anode exhaust gas AG contains sufficient moisture in the form of steam so that the anode exhaust gas AG can provide moisture necessary for the reformation of raw material gas (natural gas) NG. The fuel gas prepared in the reformer 8 is fed to the anode 3 of the fuel cell 1 by the fuel gas line 19.

Experimental results of power generation using the above-described method and system will be explained.

In order to produce the electrical power by the fuel cell 1 under the ambient or atmospheric pressure, the anode exhaust gas AG of 600-700°C was cooled approximately to 90°C by the heat exchangers 29 and 26 while preheating the anode recycle gas and the absorbent 25, respectively. In the experiment, activated potassium carbonate of 30wt% was employed as the absorbent 25. With the conditions just mentioned above, the temperature of the absorbent 25 introduced to the CO₂ separator 30 was adjusted to 75°C. Then, the anode exhaust gas AG whose pressure was 1.13 kg/cm abs was discharged from the top of the CO₂ separator 30, and it was confirmed that the anode exhaust gas contained moisture of 29.4 mol%. Next, the anode exhaust gas AG was preheated by the preheater 29 and introduced to the reformer 8 with the externally supplied raw material gas NG which contained methane as its major component. The steam mol ratio for carbon element of methane in the reformer 8 was measured and a value of 1.71 was obtained. It was also confirmed that the power generation system was operated at a reforming rate of 66% of methane feed without carbon deposition (reforming temperature was 645°C). It was further confirmed that when the fuel gas was introduced to the anode 3 of the fuel cell 1, about 56% of carbon monoxide and hydrogen contained in the fuel gas was used for the power generation. After that, the anode exhaust gas AG was cooled and introduced to the carbon dioxide separator 30 so that non-used hydrogen, carbon monoxide and methane were recovered and introduced to the anode 3 of the fuel cell 1 via the reformer 8 again. These recirculated gases contributed to the power generation, too. In this power generation system, the fuel utilization factor in the fuel cell was not high, but since non-used fuel was used again, the fuel utilization factor of the entire system was high (91%).

In the above embodiment, the reformer 8 is provided part from the fuel cell 1 in the foregoing description. However, the reformer 8 may be incorporated in the fuel cell 1 such that the reaction heat of the fuel cell may be used for the reformer 8. In such a case, the reformer 8 is generally called "internal reformer".

The present invention has following advantages.
(1) By only selecting an appropriate operation temperature of the CO₂ separator, i.e., by only selecting an appropriate temperature of the absorbent, the anode exhaust gas mixed with the raw material gas can have sufficient moisture (steam) for the reforming reaction. Thus, as compared with a conventional MCFC-system which employs a steam producing device for producing from the water the steam for the reformation, such a steam producing device is unnecessary.
(2) Since it is possible to force the absorbent to absorb moisture whose amount is equal to moisture produced upon the cell reaction, in addition to the carbon dioxide, no further device is necessary for the water removal from the anode exhaust gas.
(3) Since the water vaporizer is unnecessary, the water treatment equipment (gas-liquid separator) is also unnecessary.
(4) Since the water vaporizer is not required, heat for vaporizing the water into steam is not required. Thus, a thermal efficiency of the system as a whole can be improved.

## Claims

1. A method of producing electrical power using a molten carbonate fuel cell (1), a reformer (8) and a CO₂ separator (30), the fuel cell (1) having an anode (3) and a cathode (2) with raw material gas (NG) to be reformed being introduced to the reformer together with steam to obtain fuel gas (19), the fuel gas being introduced to the anode of the fuel cell, oxidizing gas (A) being introduced to the cathode such that a electrochemical reaction takes place between the anode (3) and the cathode (2), the method including the steps of:
(A) introducing to the CO₂ separator (30) gases (AG) discharged from the anode (referred to as "anode exhaust gas");
(C1) allowing the anode exhaust gas (AG) to contact a liquid absorbent (25) inside the CO₂ separator (30) such that CO₂ of the anode exhaust gas (AG) is absorbed and separated by the absorbent and such that the CO₂-removed anode exhaust gas contains in the form of steam moisture which corresponds to vapour pressure of the absorbent (25); and
(D) introducing the CO₂-removed anode exhaust gas (AG) to the reformer (8) from the CO₂ separator (30) together with the raw material gas (NG) such that reformation of the raw material gas occurs and the raw material gas is converted into the fuel gas (19);
characterized in that the method further includes the steps of:
(B) introducing liquid absorbent (25) to the CO₂ separator (30);
(C2) controlling temperature of the liquid absorbent to adjust an amount of the steam to be contained in the anode exhaust gas, wherein the temperature is determined such that the anode exhaust gas (AG) discharged from the CO₂ separator (30) contains steam enough for the reformation in the reformer (8).

2. The method of claim 1, characterized in that the step (A) is carried out such that the anode exhaust gas (AG) ascends in the CO₂ separator (30) and the step (B) is carried out such that the liquid absorbent (25) descends in the CO₂ separator (30) whereby the anode exhaust gas (AG) and the liquid absorbent (25) contacts each other in the step (C).

3. The method of claim 1 or 2, characterized in that the liquid absorbent (25) is heated to the predetermined temperature by the anode exhaust gas (AG).

4. The method of any one of foregoing claims, characterized in that the liquid absorbent (25) is aqueous alkali salt solutions such as potassium carbonate, amine solutions such as diethanolamine or mixture of alkali salt and amine solutions.

5. The method of any one of foregoing claims, characterized in that the liquid absorbent (25) which has absorbed CO₂ is discharged from the CO₂ separator (30) and the liquid absorbent (25) discharged from the CO₂ separator (30) is heated up with the anode exhaust gas (AG) introduced to the CO₂ separator (30).

6. The method of one of claims 2 to 6, characterized in that the CO₂ separator (30) includes a main body (31) and a bed (32), the step (A) is carried out such that the anode exhaust gas (AG) is introduced to a bottom of the main body (31) and ascends through the bed (32) in the CO₂ separator (30) and the step (B) is carried out such that the liquid absorbent (25) is introduced to a top of the main body (31) and descends through the bed (32) in the CO₂ separator (30) whereby the anode exhaust gas (AG) and the liquid absorbent (25) contacts each other in the bed (32).

## Patentansprüche

1. Verfahren zum Erzeugen von elektrischer Energie unter Verwendung einer Carbonatschmelzebrennstoffzelle (1), eines Reformers (8) und eines CO₂-Separators (30), wobei die Brennstoffzelle (1) eine Anode (3) und eine Kathode (2) hat, zu reformierendes Rohgas (NG) zusammen mit Dampf in den Reformer eingeführt wird, um Brennstoffgas (19) zu erzeugen, das Brennstoffgas in die Anode der Brennstoffzelle eingeleitet wird, oxidierendes Gas (A) in die Kathode eingeleitet wird, so daß eine elektrochemische Reaktion zwischen der Anode (3) und der Kathode (2) stattfindet, und wobei das Verfahren folgende Schritte enthält:
(A) Einführen von Gasen (AG), die von der Anode abgegeben werden (bezeichnet als "Anodenabgas") in den CO₂-Separator (30);
(C1) Schaffen der Möglichkeit, daß das Anodenabgas (AG) mit einem flüssigen Absorbens (25) innerhalb des CO₂-Separators (30) in Kontakt tritt, so daß CO₂ aus dem Anodenabgas (AG) durch das Absorbens absorbiert und abgetrennt wird und daß das von dem CO₂ befreite Anodenabgas dampfförmige Feuchtigkeit enthält, welche dem Dampfdruck des Absorbens (25) entspricht; und
(D) Einführen des CO₂-freien Anodenabgases (AG) aus dem CO₂-Separator (30) in den Reformer (8) zusammen mit dem Rohgas (NG), so daß eine Reformierung des Rohgases erfolgt und daß Rohgas in Brennstoffgas (19) umgewandelt wird;
dadurch **gekennzeichnet**, daß das Verfahren ferner folgende Schritte enthält:
(B) Einführen des flüssigen Absorbens (25) in den CO₂-Separator (30);
(C2) Kontrolle der Temperatur des flüssigen Absorbens, um den Dampfanteil einzustellen, der in dem Anodenabgas enthalten sein soll, wobei die Temperatur in der Weise bestimmt wird, daß das von dem CO₂-Separator (30) abgegebene Anodenabgas (AG) genügend Dampf zum Reformieren in dem Reformer (8) enthält.

2. Verfahren nach Anspruch 1, dadurch **gekennzeichnet**, daß der Schritt (A) in der Weise ausgeführt wird, daß das Anodenabgas (AG) in dem CO₂-Separator (30) aufsteigt, und daß der Schritt (B) so ausgeführt wird, daß das flüssige Absorbens (25) in dem CO₂-Separator (30) absteigt, wodurch das Anodenabgas (AG) und das flüssige Absorbens (25) im Schritt (C) in Kontakt miteinander treten.

3. Verfahren nach Anspruch 1 oder 2, dadurch **gekennzeichnet**, daß das flüssige Absorbens (25) durch das Anodenabgas (AG) auf die vorgegebene Temperatur erwärmt wird.

4. Verfahren nach einem der vorhergegangenen Ansprüche, dadurch **gekennzeichnet**, daß das flüssige Absorbens (25) eine wässrige Alkalisalzlösung wie Kaliumcarbonat, eine Aminlösung, wie Diethanolamin oder eine Mischung aus Alkalisalz- und Aminlösungen ist.

5. Verfahren nach einem der vorangegangenen Ansprüche, dadurch **gekennzeichnet**, daß das flüssige Absorbens (25), das CO₂ absorbiert hat, von dem CO₂-Separator (30) abgegeben wird, und daß das von dem CO₂-Separator (30) abgegebene flüssige Absorbens (25) durch das in den CO₂-Separator (30) eingeleitete Anodenabgas (AG) erhitzt wird.

6. Verfahren nach einem der Ansprüche 2 bis 6, dadurch **gekennzeichnet**, daß der CO₂-Separator (30) ein Hauptgehäuse (31) und ein Bett (32) umfaßt, daß der Schritt (A) in der Weise ausgeführt wird, daß das Anodenabgas (AG) am Boden des Hauptgehäuses (31) eingeleitet und durch das Bett (32) in dem CO₂-Separator (30) hindurch aufsteigt, und daß der Schritt (B) in der Weise ausgeführt wird, daß das flüssige Absorbens (25) am oberen Ende des Hauptgehäuses (31) eingeleitet wird und durch das Bett (32) in dem CO₂-Separator (30) absteigt, wodurch das Anodenabgas (AG) und das flüssige Absorbens (25) in dem Bett (32) miteinander in Berührung treten.

## Revendications

1. Procédé de production d'énergie utilisant une pile (1) à combustible à carbonate fondu, un reformeur (8) et un séparateur à CO₂ (30), la pile à combustible (1) ayant une anode (3) et une cathode (2), dans lequel le gaz matière première (NG) devant être reformé est introduit dans le reformeur en même temps que la vapeur afin d'obtenir un gaz combustible (19), le gaz combustible étant introduit à l'anode de la pile à combustible, et le gaz oxydant (A) étant introduit à la cathode, de telle sorte qu'une réaction électrochimique se produise entre l'anode (3) et la cathode (2), ledit procédé comportant étapes consistant à :
(A) introduire dans le séparateur à CO₂ (30) les gaz (AG) déchargés par l'anode (dénommés "gaz d'échappement de l'anode") ;
(C1) amener le gaz d'échappement de l'anode à entrer en contact avec un liquide absorbant (25) à l'intérieur du séparateur à CO₂ (30), de sorte que le CO₂ du gaz d'échappement de l'anode (AG) soit absorbé et séparé par l'absorbant, et de sorte aussi que le gaz d'échappement de l'anode débarrassé du CO₂ contienne, sous forme de vapeur, de l'humidité correspondant à la pression de vapeur de l'absorbant (25) ; et
(D) introduire le gaz d'échappement de l'anode débarrassé du CO₂ (AG) dans le reformeur (8) à partir du séparateur à CO₂ (30) en même temps que le gaz matière première (NG), de sorte que la reformation du gaz matière première se produise et que le gaz matière première soit transformé en gaz combustible (19) ;
caractérisé en ce que le procédé comporte en outre les phases consistant à :
(B) introduire de l'absorbant liquide (25) dans le séparateur à CO₂ (30) ;
(C2) piloter la température de l'absorbant liquide pour régler la quantité de vapeur qui doit être contenue dans le gaz d'échappement de l'anode, avec une température déterminée de telle sorte que le gaz d'échappement de l'anode (AG) rejeté par le séparateur à CO₂ (30) contienne suffisamment de vapeur pour la reformation dans le reformeur (8) .

2. Procédé selon la revendication 1, caractérisé en ce que l'étape (A) est exécutée de telle sorte que le gaz d'échappement de l'anode (AG) monte dans le séparateur à CO₂ (30), et l'étape (B) est exécutée de telle sorte que l'absorbant liquide (25) descende dans le séparateur à CO₂ (30), de façon que le gaz d'échappement de l'anode (AG) et l'absorbant liquide (25) entrent en contact l'un avec l'autre au cours de l'étape (C).

3. Procédé selon la revendication 1 ou 2, caractérisé en ce que l'absorbant liquide (25) est chauffé à une température prédéterminée par le gaz d'échappement de l'anode (AG) .

4. Procédé selon l'une quelconque des revendications précédentes, caractérisé en ce que l'absorbant liquide (25) est une solution alcali aqueuse comme le carbonate de potassium, une solution aminée comme le diéthylamino-éthanol, ou un mélange de solutions alcali et aminée.

5. procédé selon l'une quelconque des revendications précédentes, caractérisé en ce que l'absorbant liquide (25) qui a absorbé le CO₂ est rejeté du séparateur à CO₂ (30), et l'absorbant liquide (25) rejeté par le séparateur à CO₂ (30) est chauffé avec le gaz d'échappement de l'anode (AG) introduit dans le séparateur à CO₂ (30).

6. Procédé selon l'une des revendications 2 à 6, caractérisé en ce que le séparateur à CO₂ (30) comporte un corps principal (31) et un lit (32), en ce que l'étape (A) est exécutée de telle sorte que le gaz d'échappement de l'anode (AG) soit introduit au bas du corps principal (31) et monte à travers le lit (32) dans le séparateur à CO₂ (30), et l'étape (B) est exécutée de telle sorte que l'absorbant liquide (25) soit introduit en haut du corps principal (31) et descende à travers le lit (32) dans le séparateur à CO₂ (30), de façon que le gaz d'échappement de l'anode (AG) et l'absorbant liquide (25) entrent en contact l'un avec l'autre dans le lit (32).
